# EUROPÄISCHE PATENTSCHRIFT

(11) **EP 0 961 973 B1**
(45) Veröffentlichungstag und Bekanntmachung des Hinweises auf die Patenterteilung: **04.07.2001**
(21) Anmeldenummer: 98910662.0
(22) Anmeldetag: 13.02.1998
(51) Int. Cl.: G06F 11/16, G05B 9/03, G05B 19/05, G06F 11/277

(54) **REDUNDANT AUFGEBAUTES ELEKTRONISCHES GERAET MIT ZERTIFIZIERTEN UND NICHT ZERTIFIZIERTEN KANAELEN UND VERFAHREN DAFÜR**
REDUNDANT ELECTRONIC DEVICE WITH CERTIFIED AND NON-CERTIFIED CHANNELS AND METHOD THEREFOR
APPAREIL ELECTRONIQUE REDONDANT A CANAUX CERTIFIES ET NON CERTIFIES AVEC METHODE CORRESPONDANTE

(30) Priorität: 26.02.1997 EP 97103151
(43) Veröffentlichungstag der Anmeldung: 08.12.1999
(73) Patentinhaber: SIEMENS AKTIENGESELLSCHAFT, 80333 München (DE)
(72) Erfinder: BARTHEL, Herbert, D-91074 Herzogenaurach (DE); VON KROSIGK, Hartmut, D-91058 Erlangen (DE)
(86) Internationale Anmeldenummer: EP9800827
(87) Internationale Veröffentlichungsnummer: WO9838577

(56) Entgegenhaltungen:
- EP-A- 0 742 507
- DE-A- 3 718 582
- DE-C- 19 504 404
- US-A- 5 136 704
- ZENDER P: "SICHERHEITSGERICHTETE SPS IN ANLAGEN MIT GEFAHRDUNGSPOTENTIAL SAFETY RELATED PLC IN PLANTS WITH HAZARD POTENTIAL" AUTOMATISIERUNGSTECHNISCHE PRAXIS - ATP, Bd. 36, Nr. 12, 1.Dezember 1994, Seiten 27-34, XP000483708
- VERMA M R ET AL: "THE DESIGN AND DEVELOPMENT OF A FAIL SAFE INTERLOCKING SYSTEM MICROPROCESSORS FOR INDIAN RAILWAYS" INFORMATION TECHNOLOGIES FOR THE NINETIES - E2C2;ENERGY, ELECTRONI COMPUTERS, COMMUNICATIONS, BOMBAY, NOV. 22 - 24 NOV., 1989, Nr. CONF. 4, 22.November 1989, INSTITUTE OF ELECTRICAL AND ELECTRONICS ENGINEERS, Seiten 511-514, XP000203926
- "CARD FUNCTIONAL SELF-TEST DIAGNOSTIC METHOD" IBM TECHNICAL DISCLOSURE BULLETIN, Bd. 32, Nr. 3A, August 1989, Seite 401/402 XP000049419

## Beschreibung

Elektronisches Gerät mit zertifizierten und nicht zertifizierten Mitteln

Die vorliegende Erfindung betrifft ein elektronisches Gerät gemäß dem Oberbegriff des Anspruchs 1.

Für sicherheitsrelevante Aufgaben werden elektronische Geräte benötigt, die in hohem Maße funktionssicher sind, wobei der Ausdruck "funktionssicher" in Anlehnung an den Ausdruck "functional safety" des internationalen Schriftstücks Draft-IEC 1508 gewählt wurde.

Funktionssichere elektronische Geräte zeichnen sich dadurch aus, daß für sie spezielle Maßnahmen vorgesehen sind, um Fehler und Ausfälle zu vermeiden, zu erkennen und zu beherrschen.

Eine gebräuchliche Methode zum Vermeiden, Erkennen und Beherrschen von Fehlern und Ausfällen ist die mehrkanalige, redundante Ausführung elektronischer Geräte - in den jeweiligen Kanälen werden gleiche Operationen parallel ausgeführt. Durch Vergleich der Ergebnisse bzw. Ausgangswerte wird erkannt, ob in einem der Kanäle ein Fehler aufgetreten ist.

Eine bestimmte Gruppe von Fehlern, die für die Gewährleistung eines funktionssicheren Betriebs von besonderer Relevanz sind, sind die sogenannten systematischen Fehler einer Baugruppe, eines Bauteils oder einer Komponente eines Kanals. Derartige Fehler können z.B. durch die logische Struktur, d.h. die Verschaltung der einzelnen Komponenten und Baugruppen untereinander, oder deren physikalischen Eigenschaften, die durch den jeweils angewandten Herstellungsprozeß bedingt sind, begründet sein. Die für die vorgesehene Anwendung ausreichende Freiheit von systematischen Fehlern wird durch umfangreiche Zertifizierungsmaßnahmen nachgewiesen.

Bei der heutigen schnellen Entwicklung der Halbleitertechnologie werden die Herstellungsprozesse bereits nach kurzer Zeit gewechselt. Dies hat zur Folge, daß für die betreffenden Komponenten und Baugruppen ihre Freiheit von systematischen Fehlern immer wieder neu nachgewiesen werden muß, denn der Betrieb derartiger Komponenten und Baugruppen in einem als funktionssicher eingestuften System ist nur nach umfangreichen Zertifizierungsmaßnahmen zulässig.

Der schnelle Innovationszyklus im Bereich der Halbleiter hat zur Folge, daß diese Zertifizierung z.B. mit jeder neuen Mikroprozessorgeneration oder jeder neuen Speicherbausteingeneration neu durchgeführt werden muß, wobei die für den Zertifizierungsprozeß aufgrund der für die zu erbringenden Tests und/oder der für den Nachweis der Betriebsbewährtheit zu veranschlagenden Zeit dazu führt, daß neuartige Bauteile erst mit erheblicher Verzögerung für sicherheitsrelevante Anwendungen eingesetzt werden können.

Ein elektronisches Gerät gemäß dem Oberbegriff des Anspruchs 1 ist aus der DE 195 04 404 C1 bekannt. Dort sind zwei Prozessoren vorgesehen, die gemeinsam einen Prozeß steuern und ständig ihre Daten miteinander vergleichen. Auf einem der beiden Prozessoren läuft ein Programmkomplex, der hinsichtlich der möglichen Fehler überprüft ist, sowie ein nicht überprüfter Programmkomplex. Um eine Störung des überprüften Programmkomplexes durch den nicht überprüften auszuschließen, sind die Peripheriemittel, die mit dem überprüften Programmkomplex zusammenarbeiten, mit Inhibiteingängen versehen und der geprüfte Programmkomplex sperrt über die Inhibiteingänge die für ihn reservierten Peripheriemittel, ehe er die Regie an den nicht überprüften Programmkomplex abgibt.

Die Aufgabe der vorliegenden Erfindung besteht folglich darin, ein elektronisches Gerät anzugeben, mit dem es möglich ist, in sicherheitsrelevanten Systemen Baugruppen, Bauteile oder Komponenten zu betreiben, für welche die ausreichende Freiheit von systematischen Fehlern noch nicht nachgewiesen wurde.

Diese Aufgabe wird durch die im kennzeichnenden Teil des Anspruchs 1 angegebenen Maßnahmen gelöst.

Als von systematischen Fehlern ausreichend freier Kanal wird in diesem Zusammenhang ein Kanal verstanden, dessen Versagenswahrscheinlichkeit über einen bestimmten Zeitraum eine bestimmte, durch die jeweilige Anwendung beeinflußte Schwelle, die z.B. eine Schwelle nach dem internationalen Schriftstück Draft-IEC 1508 sein kann, nicht überschreitet.

Vorteilhaft ist, daß für das elektronische Gerät ein Selbsttest realisiert ist, der gewährleistet, daß das elektronische Gerät seinen Betrieb nur dann aufnimmt, wenn sichergestellt ist, daß mindestens einer der Kanäle des mindestens zweikanalig aufgebauten elektronischen Gerätes ein von systematischen Fehlern ausreichend freier, d.h. zertifizierter Kanal ist.

Wenn die Abfrage der Kennung der einzelnen Kanäle sequentiell erfolgt, ist eindeutig ermittelbar, welcher der Kanäle ein von systematischen Fehlern ausreichend freier, d.h. zertifizierter Kanal ist und welcher der Kanäle ein von systematischen Fehlern nicht ausreichend freier, d.h. nicht zertifizierter Kanal ist.

Wenn die Kennung des nicht zertifizierten Kanals beim Betrieb des elektronischen Gerätes nach einer vorgebbaren, von erkannten Fehlern freien Zeitspanne von der zweiten Kennung, die den Kanal als nicht zertifiziert charakterisiert, auf die erste Kennung, die den Kanal als zertifiziert charakterisiert, wechselbar ist, ist nach ausreichender Betriebsdauer und Bewertung des Betriebsverhaltens des bisher nicht zertifizierten Kanals dieser Kanal selbst als Referenzkanal einsetzbar, so daß mit dem elektronischen Gerät z.B. Bauteile, Komponenten oder Baugruppen der übernächsten Generation, die natürlich noch nicht zertifiziert sind, eingesetzt werden können, ohne vorher deren Fehlerfreiheit nachweisen zu müssen.

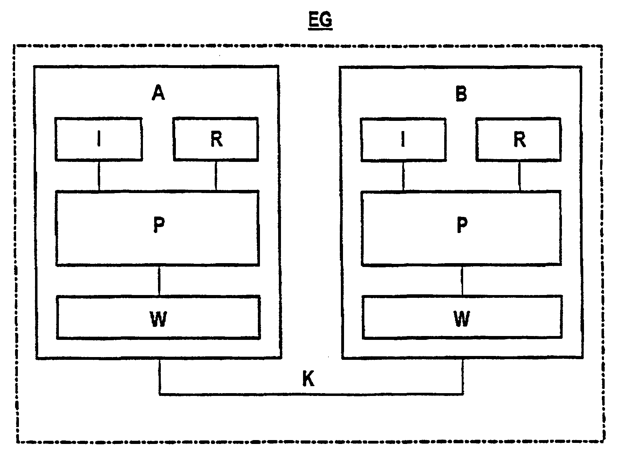

Weitere Vorteile und erfinderische Einzelheiten ergeben sich aus der nachfolgenden Beschreibung eines Ausführungsbeispiels unter Bezugnahme auf die einzige Figur der Zeichnung und in Verbindung mit den Unteransprüchen. Die Figur der Zeichnung zeigt ein Blockschaltbild einer zweikanalig homogen redundant aufgebauten Zentraleinheit einer speicherprogrammierbaren Steuerung.

Mit EG ist ein elektronisches Gerät bezeichnet, das eine zweikanalig homogen redundant aufgebaute Zentraleinheit einer speicherprogrammierbaren Steuerung ist. Homogene Redundanz bezeichnet hier die Tatsache, daß die einzelnen Kanäle symmetrisch mit zumindest funktionsgleichen Bauteilen, Komponenten oder Baugruppen aufgebaut sind.

Im Ausführungsbeispiel weist der Kanal A einen Mikroprozessor P, einen Programmspeicher I und einen Datenspeicher R auf. Der Betrieb des Mikroprozessors P wird mittels einer Überwachungseinheit W, eines sogenannten Watchdogs W überwacht. Der Kanal B ist homogen redundant zum Kanal A ..... aufgebaut, was insbesondere anhand der gleichen Komponenten P, I, R, die jeweils auch mit gleichen Bezugszeichen versehen sind, deutlich wird.

Kanal A muß aus den Komponenten P, I, R, W aufgebaut sein, für die die Freiheit von systematischen Fehlern ausreichend nachgewiesen ist, mithin die jeweiligen Komponenten, Bauteile und Baugruppen also zertifiziert sind. Damit stellt sich Kanal A insgesamt als von systematischen Fehlern ausreichend freier Kanal A dar.

In Kanal B werden eine oder mehrere Komponenten P, I, R, W in Versionen eingesetzt, die in irgendeiner Weise verändert wurden, z.B. aufgrund eines neuen oder geänderten Fertigungsprozesses, und für die die Freiheit von systematischen Fehlern noch nicht ausreichend nachgewiesen ist.

Werden in den betreffenden Bauteilen, Komponenten oder Baugruppen von Kanal B eventuell vorhandene systematische Fehler wirksam, werden diese durch Ergebnisvergleich mit Kanal A, der über die Kopplung K, die zwischen den Kanälen A und B besteht, durchführbar ist, erkannt und können somit beherrscht werden.

Damit ist es möglich, ohne Verschlechterung der Sicherheitseigenschaften in einem Kanal A, B des redundanten elektronischen Gerätes EG Bauteile, Komponenten oder Baugruppen zu verwenden, deren Fehlerfreiheit noch nicht ausreichend nachgewiesen ist, die mithin noch nicht zertifiziert sind.

Mit Hilfe des Ergebnisvergleichs werden systematische Fehler, die z.B. durch die physikalischen Eigenschaften der jeweiligen elektronischen Bauteilen, Komponenten oder Baugruppen oder durch einen veränderten Fertigungs- oder Montageprozeß bedingt sind, erkannt.

Das erfindungsgemäße elektronische Gerät EG erlaubt es dem Anbieter eines derartigen Gerätes unmittelbar auf die Innovationszyklen z.B. der Halbleiterindustrie zu reagieren und auch in funktionssicheren Systemen stets Bauteile, Komponenten oder Baugruppen anzubieten, die dem aktuellen Stand der Entwicklung entsprechen, auch wenn für diese Bauteile deren ausreichende Freiheit von systematischen Fehlern bisher mit einer Zertifizierung noch nicht explizit nachgewiesen ist.

In diesem Zusammenhang muß es als besonders vorteilhaft angesehen werden, daß mit dem erfindungsgemäßen Verfahren bzw. dem erfindungsgemäßen elektronischen Gerät EG diese Zertifizierung implizit zu erreichen ist.

Zu diesem Zweck ist es vorgesehen, daß für jeden Kanal A,B des elektronischen Gerätes EG eine Kennung verwaltet wird, die darüber Aufschluß gibt, ob der jeweilige Kanal A, B als von systematischen Fehlern ausreichend frei angesehen werden kann. Nach einer bestimmten, insbesondere vom Benutzer frei wählbaren Zeitspanne, bei der im Betrieb des elektronischen Gerätes EG im bisher nicht zertifizierten Kanal A, B kein systematischer Fehler erkannt wurde, ist diese Kennung von "nicht zertifiziert" auf "zertifiziert" umschaltbar, so daß auch der bisher explizit nicht zertifizierte Kanal, dessen Freiheit von systematischen Fehlern im konkreten Betrieb ausreichend nachgewiesen ist, wie ein explizit zertifizierter Kanal eingesetzt werden kann.

Dies ermöglicht es insbesondere in einem elektronischen Gerät EG zusammen mit diesem nunmehr "online-zertifizierten Kanal" in einem weiteren, redundanten Kanal A, B auch Bauteile, Baugruppen oder Komponenten der übernächsten Generation von Halbleiterbauelementen einzusetzen, und sodann entsprechend dem oben beschriebenenen Vorgang auch für diese Komponenten nach Möglichkeit deren ausreichende Freiheit von systematischen Fehlern nachzuweisen.

Damit ermöglicht der Einsatz des erfindungsgemäßen elektronischen Gerätes EG bzw. die Anwendung des erfindungsgemäßen Verfahrens jederzeit die Verwendung der neuesten Bauteile, Baugruppen oder Komponenten, die ansonsten erst nach einem zeitaufwendigen Zertifizierungsprozeß für die Anwendung in sicherheitsrelevanten Systemen freigegeben werden.

## Patentansprüche

1. Elektronisches Gerät mit zertifizierten und nicht zertifizierten Mitteln, **dadurch gekennzeichnet**, daß das elektronische Gerät (EG) zumindest zweikanalig homogen redundant aufgebaut ist und zumindest einen nicht zertifizierten Kanal (B) und zumindest einen zertifizierten Kanal (A) aufweist, der ein von systematischen Fehlern ausreichend freier Kanal ist, wobei
- für jeden Kanal (A, B) ein abfragbares Kennzeichen vorgesehen ist,
- beim Abfragen des Kennzeichens für einen zertifizierten Kanal (A) eine erste Kennung (T) bzw. für einen nicht zertifizierten Kanal (B) eine zweite Kennung (F) ermittelbar ist,
- das elektronische Gerät (EG) seinen Betrieb nur dann aufnimmt, wenn bei der Abfrage der Kennung der einzelnen Kanäle (A, B) zumindest einmal die erste Kennung (T) vorliegt.

2. Elektronisches Gerät nach Anspruch 1, **dadurch gekennzeichnet**, daß die Abfrage der Kennung der einzelnen Kanäle (A, B) sequentiell erfolgt.

3. Elektronisches Gerät nach Anspruch 1 oder 2, **dadurch gekennzeichnet**, daß die Kennung des nicht zertifizierten Kanals (B) nach einer vorgebbaren, von erkannten Fehlern freien Zeitspanne von der zweiten Kennung (F) auf die erste Kennung (T) wechselbar ist.

4. Elektronisches Gerät nach einem der Ansprüche 1 bis 3, **dadurch gekennzeichnet**, daß das elektronische Gerät (EG) eine programmierbare Logik ist.

5. Verfahren zum Betreiben eines zumindest zweikanalig homogen redundant aufgebauten elektronischen Gerätes (EG), insbesondere einer zweikanalig homogen redundant aufgebauten programmierbaren Logik, wobei das elektronische Gerät (EG) zumindest einen zertifizierten Kanal (A) und zumindest einen nicht zertifizierten Kanal (B) aufweist, wobei der zertifizierte Kanal (A) ein von systematischen Fehlern ausreichend freier Kanal ist, wobei für jeden Kanal (A, B) ein abfragbares Kennzeichen vorgesehen ist, wobei beim Abfragen des Kennzeichens für einen zertifizierten Kanal (A) eine erste Kennung (T) bzw. für einen nicht zertifizierten Kanal (B) eine zweite Kennung (F) ermittelt wird, wobei das elektronische Gerät (EG) seinen Betrieb nur dann aufnimmt, wenn bei der Abfrage der Kennung der einzelnen Kanäle (A, B) zumindest einmal die erste Kennung (T) auftritt.

6. Verfahren nach Anspruch 5, **dadurch gekennzeichnet,** daß die Abfrage der Kennung der einzelnen Kanäle (A, B) sequentiell erfolgt.

7. Verfahren nach Anspruch 5 oder 6, **dadurch gekennzeichnet**, daß die Kennung des nicht zertifizierten Kanals (B) nach einer vorgebbaren, von erkannten Fehlern freien Zeitspanne von der zweiten Kennung (F) auf die erste Kennung (T) gewechselt wird.

## Claims

1. Electronic device with certified and uncertified means, characterised in that the electronic device (EG) is constructed homogeneously redundantly with at least two channels and has at least one uncertified channel (B) and at least one certified. channel (A), which is a channel which is sufficiently free from systematic errors, wherein
- there is provided for each channel (A, B) an identification which can be interrogated,
- upon interrogation of the identification for a certified channel (A) a first identifier (T) can be determined, and for an uncertified channel (B) a second identifier (F) can be determined,
- the electronic device (EG) takes up its operation only if, during the interrogation of the identifier of the individual channels (A, B), the first identifier (T) is present at least once.

2. Electronic device according to claim 1, characterised in that the interrogation of the identifier of the individual channels (A, B) takes place sequentially.

3. Electronic device according to claim 1 or 2, characterised in that after a predeterminable time span which is free from recognised errors, the identifier of the uncertified channel (B) can be changed from the second identifier (F) to the first identifier (T).

4. Electronic device according to one of claims 1 to 3, characterised in that the electronic device (EG) is a programmable logic element.

5. Method for operating an electronic device (EG) which is constructed homogeneously redundantly with at least two channels, in particular a programmable logic element which is constructed homogeneously redundantly with two channels, wherein the electronic device (EG) has at least one certified channel (A) and at least one uncertified channel (B), wherein the certified channel (A) is a channel which is sufficiently free from systematic errors, wherein there is provided for each channel (A, B) an identification which can be interrogated, wherein upon interrogation of the identification for a certified channel (A) a first identifier (T) is determined, and for an uncertified channel (B) a second identifier (F) is determined, wherein the electronic device (EG) takes up its operation only if, during the interrogation of the identifier of the individual channels (A, B), the first identifier (T) occurs at least once.

6. Method according to claim 5, characterised in that the interrogation of the identifier of the individual channels (A, B) takes place sequentially.

7. Method according to claim 5 or 6, characterised in that after a predeterminable time span which is free from recognised errors, the identifier of the uncertified channel (B) is changed from the second identifier (F) to the first identifier (T).

## Revendications

1. Appareil électronique à moyens certifiés et non certifiés, caractérisé en ce que l'appareil (EG) électronique est constitué de manière redondante homogène au moins à deux canaux et comporte au moins un canal (B) non certifié et au moins un canal (A) certifié qui est un canal suffisamment exempt d'erreurs systématiques,
- un signe d'identification pouvant être interrogé étant prévu pour chaque canal (A, B),
- une première identification (T) pour un canal (A) certifié et une deuxième identification (F) pour un canal (B) non certifié pouvant être déterminées lors de l'interrogation du signe d'identification,
- l'appareil (EG) électronique ne prenant son fonctionnement que si, lors de l'interrogation de l'identification des canaux (A, B) individuels, la première identification (T) est présente au moins une fois.

2. Appareil électronique suivant la revendication 1, caractérisé en ce que l'interrogation de l'identification des canaux (A, B) individuels s'effectue de manière séquentielle.

3. Appareil électronique suivant la revendication 1 ou 2, caractérisé en ce que l'identification du canal (B) non certifié peut passer de la deuxième identification (F) à la première identification (T) après un laps de temps qui peut être prescrit et qui a été exempt d'erreurs reconnues.

4. Appareil électronique suivant l'une des revendications 1 à 3, caractérisé en ce que l'appareil (EG) électronique est un dispositif logique programmable.

5. Procédé pour faire fonctionner un appareil (EG) électronique, constitué de manière redondante homogène à au moins deux canaux, notamment un dispositif logique programmable constitué de manière redondante homogène à deux canaux, l'appareil (EG) électronique comportant au moins un canal (A) certifié et au moins un canal (B) non certifié, le canal (A) certifié étant un canal suffisamment exempt d'erreurs systématiques, un signe d'identification qui peut être interrogé étant prévu pour chaque canal (A, B), une première identification (T) pour un canal (A) certifié et une deuxième identification (F) pour un canal (B) non certifié étant déterminées lors de l'interrogation du signe d'identification, l'appareil (EG) électronique ne prenant son fonctionnement que si, lors de l'interrogation de l'identification des canaux (A, B) individuels, la première identification (T) apparaît au moins une fois.

6. Procédé suivant la revendication 5, caractérisé en ce que l'interrogation de l'identification des canaux (A, B) individuels s'effectue de manière séquentielle.

7. Procédé suivant la revendication 5 ou 6, caractérisé en ce que l'identification du canal (B) non certifié passe de la deuxième identification (F) à la première identification (T) après un laps de temps qui peut être prescrit et qui est exempt d'erreurs reconnues.
